# EUROPEAN PATENT SPECIFICATION

(11) **EP 0 535 756 B1**
(45) Date of publication and mention of the grant of the patent: **04.12.1996**
(21) Application number: 92203015.0
(22) Date of filing: 01.10.1992
(51) Int. Cl.: A01J 7/00, A01K 13/00

(54) **An implement for cleaning teats of milk-producing animals**
Gerät zum Reinigen der Zitzen von milchgebenden Tieren
Dispositif pour nettoyer les pis des animaux produisant du lait

(30) Priority: 04.10.1991 NL 9101673
(43) Date of publication of application: 07.04.1993
(73) Proprietor: Texas Industries Inc., Willemstad, Curaçao (AN)
(72) Inventor: van der Lely, Cornelis, Zug (CH)
(74) Representative: Mulder, Herman

(56) References cited:
- EP-A- 0 323 444
- FR-A- 2 501 965
- FR-A- 2 559 351
- US-A- 4 010 714

## Description

The present application relates to an implement for cleaning teats of milk-producing animals, such as cows, with a robotarm capable of carrying a cleaning device which can be brought under the udder of an animal in order to clean the teats of the animal, means to supply a cleaning liquid and means to supply drying air, a computer being provided with means for process control, whereby the cleaning device can be brought under the animal's udder and the cleaning process of the teats is performed by subsequently supplying the cleaning liquid and the drying air to the cleaning device.

From a hygiene standpoint and with a view to the standards of quality to be imposed on milk, it is important that the animal's udders, or at least their teats, are cleaned prior to milking. In the past this has been done manually. However, when use is made of an implement for milking animals automatically, it is important that an implement is provided for cleaning the teats of these animals. Therefore, an implement as described in the opening paragraph can be applied. Such an implement is known from EP-A1-0 332 231. In this known implement, the cleaning device includes a bowl which can be brought into close contact around the animal's udder and is provided with a plurality of spraying nozzles for spraying a cleaning liquid against the animal's udder. Furthermore, to enable drying of the udder after cleaning, warm air may be passed to the udder via an aperture in the bowl. Particularly, when the animals have lain in a dirty environment, the cleaning of the teats with such a cleaning device may be insufficient. Therefore, according to the invention, the implement is characterized in that the cleaning device is provided with rotatable cleaning members and the air is supplied to the cleaning device via at least one of these cleaning members. A cleaning device with only one rotatable cleaning member wherein, in order to clean the udder of an animal, a cleaning liquid and drying air are successively applied, is known from FR-A-2 501 965. According to the invention, more than one rotatable cleaning member is provided, so that, dependent of the direction of rotation of the cleaning members, the teats can be drawn between these cleaning members during the rotation thereof, with the consequence that the cleaning process is performed more effectively. Further, the cleaning device in FR-A 2 501 965 can only be operated by hand. The rotary speed of the cleaning members will be relatively high and preferably such that any cleaning liquid present herein, with the supply of drying air, is expelled to the outside by the centrifugal effect.

According to another aspect of the invention, there are provided means for determining the positions of the teats, with the aid of which means the cleaning members are automatically connectable to the animal's udder. In a preferred embodiment hereof, the cleaning members are also rotatable through approximately 120 degrees about a substantially horizontal axis such that, after the cleaning process, the teat cups are immediately connectable. The cleaning members and teat cups can thus be arranged at an angle of approximately 120 degrees with respect to each other on or near the (outer) end of a robot arm of an automatic milking plant, where either the cleaning members or the teat cups are put in the right position under the animal's udder by rotation of at least the final portion of this robot arm.

The invention further relates to an implement for cleaning teats of milk-producing animals, such as cows, which implement is characterized in that the cleaning members are provided with rotatable textile disks. In particular, e.g. the cleaning members in between the pairs of teats can comprise rotatable textile disks, whereas the cleaning members on the exterior of the pairs of teats can comprise brushes.

According to a further aspect of the invention, the cleaning members are arranged in a bowl. This bowl is capable of being provided with flexible edges suitable for connecting the bowl to the animal's udder. According to still another aspect of the invention, the cleaning liquid can be applied to the periphery of a cleaning member via the liquid supply means, and the drying air to the teats via the drying air supply means and through at least one of the cleaning members. Particularly, hereby the axis of rotation of a cleaning member can be implemented as a tube provided with apertures, said tube being connected to the drying air supply means.

According to another aspect of the invention, there is provided a computer with means for process control, with the aid of which the cleaning members are connectable to the animal's udder, the cleaning liquid is applied and the cleaning process is performed, whilst furthermore there is provided a sensor capable of establishing the extent of contamination of the cleaning liquid, with the cleaning process being terminated and the milking process being started when, with the aid of said sensor, it has been established that the contamination has come below a defined level. The cleaning process as well as the subsequent milking process are capable of being automatically performed.

The invention will now further be explained with reference to the exemplary embodiment reflected by the accompanying drawings, wherein:
Figure 1 is a schematic representation of a milking parlour provided with a milking robot, which includes the implement according to the invention;
Figure 2 shows in a schematic representation the orientation of the milking cups with respect to the implement according to the invention and with respect to the robot arm of the milking robot, on which arm the milking cups and said implement are provided;
Figure 3 shows a longitudinal section of the implement according to the invention, and
Figure 4 depicts a top view of the implement according to the invention.

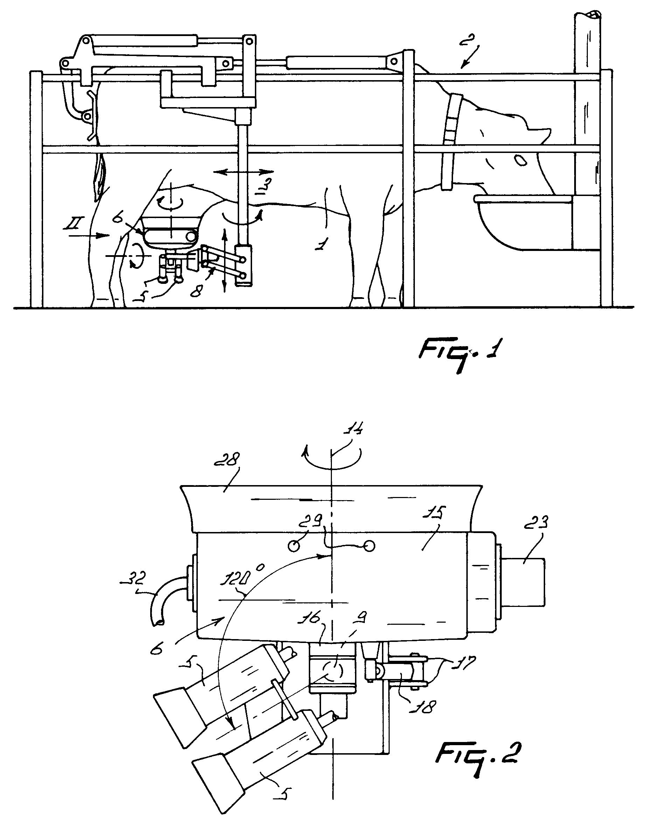

In Figure 1, a cow 1 in milking parlour 2 is depicted, where said milking parlour is provided with a milking robot 3. This milking robot is represented only schematically and hereinafter it will not be described in further detail, since it is no part of the invention. As far as it may be of significance, it is noticed that the milking robot is movable in the longitudinal direction of the milking parlour 2, whilst one or several arms of the milking robot 3 can be swung in a substantially horizontal plane, whilst a last robot arm 4 acting as carrier of teat cups 5 is also movable in height. Various embodiments of such a milking robot have been known for some time and all of them have the capability to position a robot arm provided with teat cups under a cow's udder and that in such a way that by moving upward either each of the teat cups or the joint teat cups, and in case of the latter at least the outer end of the robot arm at the same time then, said teat cups are connectable to the teats of the animal's udder. The robot arm 4 is also provided with a cleaning device 6 for cleaning these teats. The robot arm 4, on which the teat cups 5 and the cleaning device according to the invention 6 are installed, is rotatable about its longitudinal axis, supported by a bearing device 7 at the end of a robot arm 8 capably of swinging in elevation. In a plane perpendicular to the axis of rotation of the robot arm 4, the teat cups 5 and the cleaning device 6 according to the invention are situated at an angle of 120 degrees with respect to each other, so that by 120 degrees rotation of the robot arm 4 about its longitudinal axis either the teat cups 5 or the cleaning device 6 can be directed upward into a position where the teat cups 5 are connectable to the udder's teats or the cleaning device 6 is connectable to the udder in its entirety. Rotation of the teat cups 5 or the cleaning device 6 is by means of a reversing motor. Obviously, this can also be achieved by means of e.g. a lever gear under hydraulic control. The device 6 is provided with cleaning members 10 through 13 capable of operating in at least two different positions, which positions are obtained by e.g. by rotation through approximately 90 degrees about an upward axis 14. A cleaning operation in two or more positions is achieved here by arranging the cleaning members in a bowl 15, said bowl 15 being rotatable in a bearing 17 in the robot arm 4 by means of a bottom end part in the form of a shaft 16. The bowl 15 is driven to rotate about the axis 14 by means of a lever gear 17 and a control cylinder 18. The cleaning members comprise for every two teats a pair of brushes 10, 11 and 12, 13, with one brush of a pair, 11 and 12 respectively, being arranged in between the pairs of teats, the other, 10 and 13 respectively, on the exterior of a relevant pair of teats. In other words, the cleaning members comprise brushes 10 through 13 being driven during operation such that a teat, or more properly speaking, a pair of teats is cleaned on two sides by these brushes.

The brushes 10 and 11 as well as the brushes 12 and 13 are rotatable in mutually opposite directions and that such that the brushes are movable along a teat or pair of teats from top to bottom. Consequently, the dirt is removed along the teats in downward direction. The brushes 10 to 13 are rotatable about respective, substantially horizontal shafts 19 to 22 and are driven by means of a motor 23 and gear wheels 24 to 27 provided on said shafts. The brushes 10 and 13 are larger in diameter than the brushes 11 and 12. As the corresponding gear wheels 24 and 27 on the shafts 19 and 22 are larger than the gear wheels 25 and 26 on the shafts 20 and 21, the brushes 11 and 12 are driven at a higher speed than the brushes 10 and 13. The brushes 10 to 13 can be hairy and be provided with synthetic fibres; but it is also possible to construct the cleaning members 10 and 13 as brushes, whilst the cleaning members 11 and 12 are made from a plurality of substantially round textile disks. Whether the cleaning members 11 and 12 comprise brushes or rotary textile disks, in both cases the cleaning members will engage each other. In other words, the shafts 20 and 21 are at an interval which is smaller than the diameter of one of the cleaning members. The bowl 15 housing the cleaning members 10 through 13 is provided with flexible edges 28, so that suitable sealing of the bowl 15 around the animal's udder is obtainable.

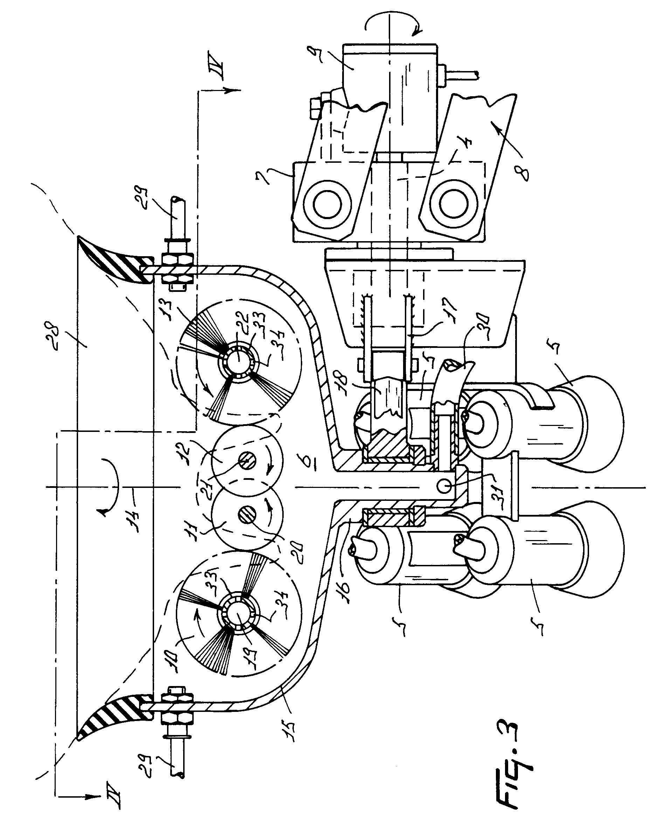

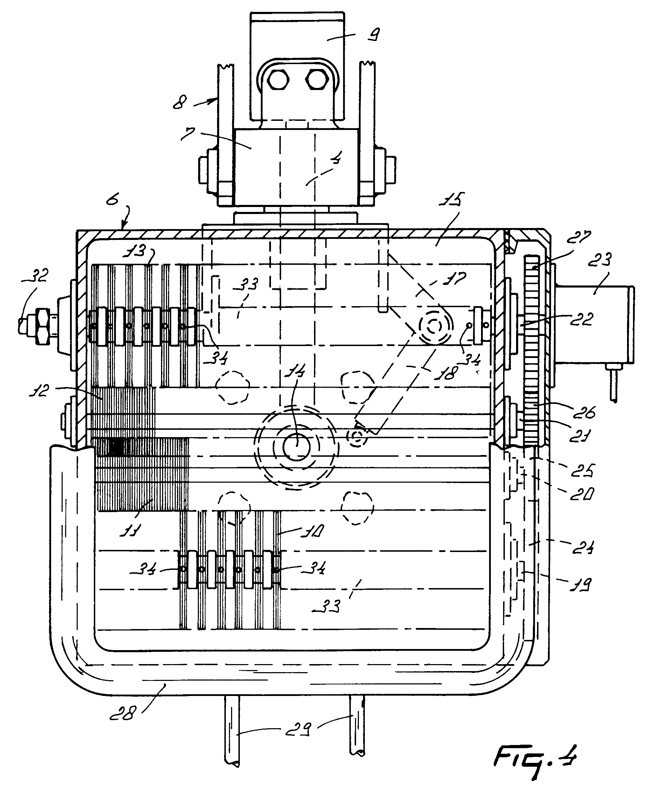

A cleaning liquid is used for cleaning the animal's teats. The implement is therefore provided with means for the supply of a liquid, with the aid of which means said liquid is supplied to the periphery of a cleaning member. As to these cleaning liquid supply means, only the line connector 29 on the bowl 15 is depicted in Figures 3 and 4. The cleaning liquid supplied to the cleaning members 10 through 13 is guided along the teats through the fact that a certain liquid level is maintained in the bowl 15, whilst cleaning liquid is swept along by the cleaning members 10 to 13 when rotating. The liquid is drained off through an outlet in the shaft-like bottom end 16 of the bowl 15 and a discharge hose 30. A sensor 31 is provided at the foot of the shaft-like bottom end 16 of the bowl 15, said sensor being capable of establishing the extent of contamination of the cleaning liquid. In principle, the supply of liquid through the length of line 29 on the bowl 15 and its discharge through the bottom end 16 of the bowl 15 and the discharge hose 30 lasts until it has been established by means of sensor 31 that the contamination of the cleaning liquid has come below a defined level. It is then assumed that the animal's teats have been cleaned sufficiently, which permits the robot arm to be moved downward and the bowl 15 to be removed subsequently by rotation about the longitudinal axis of the robot arm 4 and the teat cups 5 to be put in the position straight under the animal's teats, so that, after the robot arm 4 has been moved upward and the teat cups 5 have been connected to the teats, the process of milking can take place.

Nevertheless, it may be desirable to have a process of drying performed in between wet cleaning and milking. The implement is therefore also provided with means for the supply of drying air, with the aid of which means drying air may be supplied to one or several teats. As to these drying air supply means, only the line connector 32 on the bowl 15 is depicted in Figure 4. It is advantageous to supply the drying air through a cleaning member; in Figure 4, drying air is supplied through shafts 19 and 20, being hollow shafts in the form of tubes 33, of the cleaning members 10 and 13. These tubes are then provided with radial apertures 34. By combining this tubular construction with a relatively high rotary speed of the cleaning members it is achieved that cleaning liquid present in the relevant cleaning members is expelled outward by the centrifugal effect. To be able to have the cleaning process and the subsequent milking process performed fully automatically, there are provided means for determining the positions of the teats, enabling the robot arm 4 to be positioned under the animal such that the bowl 15 is easily and correctly connectable to the animal's udder. After the cleaning process, when the bowl 15 is moved downward and turned away and, subsequently, the teat cups 5 are put under the teats of the animal's udder, a slight adjustment to the robot arm 4 is made, if necessary, in order to ensure that the teat cups 5 are connectable. The positioning means for this purpose are usually the same as those through which the bowl 15 is positioned under the udder, although the requirements to be imposed on the positioning of the teat cups 5 under the teats are more severe than those for the positioning of the bowl 15 only. The implement according to the invention furthermore comprises a computer with process control means including said positioning means, with the aid of which the cleaning members are connectable to the animal's udder, the cleaning liquid is supplied and the cleaning process is performed, whilst also with the aid of the sensor 31 the contamination of the cleaning liquid is determined, whereas, when the contamination has come below a defined level the cleaning process is stopped and the milking process is started.

## Claims

1. An implement for cleaning teats of milk-producing animals, such as cows, with a robotarm (8) capable of carrying a cleaning device (6) which can be brought under the udder of an animal in order to clean the teats of the animal, means (29) to supply a cleaning liquid and means (32) to supply drying air, a computer being provided with means for process control, whereby the cleaning device (6) can be brought under the animal's udder and the cleaning process of the teats is performed by subsequently supplying the cleaning liquid and the drying air to the cleaning device, characterized in that the cleaning device (6) is provided with rotatable cleaning members (10 to 13) and the air is supplied to the cleaning device via at least one of these cleaning members.

2. An implement as claimed in claim 1, characterized in that the rotary speed of the cleaning members (10 to 13) is such that the cleaning liquid provided herein is removed by the centrifugal effect when drying air is supplied.

3. An implement as claimed in claim 1 or 2, characterized in that there are provided means for determining the positions of the teats, with the aid of which means the cleaning members (10 to 13) are connectable to the animal's udder automatically.

4. An implement as claimed in any one of the preceding claims, characterized in that the cleaning members (10 to 13) are rotatable through approximately 120 degrees about a substantially horizontal axis such that, after the cleaning process, the teat cups (5) are immediately connectable.

5. An implement as claimed in any one of the preceding claims, characterized in that the cleaning members (10 to 13) are provided with rotary textile disks.

6. An implement as claimed in any one of the preceding claims, characterized in that the cleaning members (10 to 13) are arranged in a bowl (15).

7. An implement as claimed in claim 6, characterized in that the bowl (15) has flexible edges (28), with the aid of which the bowl (15) is connectable to the animal's udder.

8. An implement as claimed in any one of the preceding claims, characterized in that via the liquid supply means (29) the cleaning liquid is deliverable to the periphery of a cleaning member (10, 13).

9. An implement as claimed in any one of the preceding claims, characterized in that via the drying air supply means (32) and through at least one of the cleaning members (13) the drying air is deliverable to the teats.

10. An implement as claimed in any one of the preceding claims, characterized in that the axis of rotation of a cleaning member (10, 13) is implemented as a tube (33) provided with apertures, said tube being connected to the drying air supply means (32).

11. An implement as claimed in any one of the preceding claims, characterized in that there is provided a computer with means for process control, with the aid of which the cleaning members (10 to 13) are connectable to the animal's udder, the cleaning liquid is supplied and the cleaning process is performed, whilst furthermore there is provided a sensor (31) capable of establishing the extent of contamination of the cleaning liquid, with the cleaning process being terminated and the milking process being started when, with the aid of said sensor (31), it has been established that the contamination has come below a defined level.

## Patentansprüche

1. Vorrichtung zum Reinigen der Zitzen von milchgebenden Tieren, wie z. B. von Kühen, mit einem Roboterarm (8), an dem eine Reinigungsvorrichtung (6) abzustützen ist, die zum Reinigen der Zitzen eines Tieres unter das Euter des Tieres zu bewegen ist, einer Vorrichtung (29) zum Zuführen von Reinigungsflüssigkeit sowie einer Vorrichtung (32) zum Zuführen von Trocknungsluft, wobei ein Computer mit Programmsteuerung vorgesehen ist, mittels der die Reinigungsvorrichtung (6) unter das Euter des Tieres zu bewegen ist und das Reinigen der Zitzen durch anschließende Zufuhr der Reinigungsflüssigkeit und der Trocknungsluft zu der Reinigungsvorrichtung durchgeführt wird,
dadurch gekennzeichnet, daß die Reinigungsvorrichtung (6) drehbare Reinigungselemente (10 bis 13) aufweist und die Luft über mindestens eines dieser Reinigungselemente der Reinigungsvorrichtung zugeführt wird.

2. Vorrichtung nach Anspruch 1,
dadurch gekennzeichnet, daß die Rotationsgeschwindigkeit der Reinigungselemente (10 bis 13) so gewählt ist, daß die in ihnen befindliche Reinigungsflüssigkeit durch die Wirkung der Zentrifugalkraft ausgebracht wird, wenn Trocknungsluft zugeführt wird.

3. Vorrichtung nach Anspruch 1 oder 2,
dadurch gekennzeichnet, daß eine Vorrichtung zum Bestimmen der Zitzenpositionen vorgesehen ist, mittels der die Reinigungselemente (10 bis 13) automatisch an das Tiereuter anzuschließen sind.

4. Vorrichtung nach einem der vorhergehenden Ansprüche,
dadurch gekennzeichnet, daß die Reinigungselemente (10 bis 13) um etwa 120 Grad um eine im wesentlichen horizontale Achse derart drehbar sind, daß die Zitzenbecher (5) nach dem Reinigungsvorgang unverzüglich anzuschließen sind.

5. Vorrichtung nach einem der vorhergehenden Ansprüche,
dadurch gekennzeichnet, daß die Reinigungselemente (10 bis 13) mit rotierenden Textilscheiben versehen sind.

6. Vorrichtung nach einem der vorhergehenden Ansprüche,
dadurch gekennzeichnet, daß die Reinigungselemente (10 bis 13) in einem Becken (15) angeordnet sind.

7. Vorrichtung nach Anspruch 6,
dadurch gekennzeichnet, daß das Becken (15) einen elastischen Rand (28) aufweist, mittels dessen das Becken (15) an das Tiereuter anzuschließen ist.

8. Vorrichtung nach einem der vorhergehenden Ansprüche,
dadurch gekennzeichnet, daß die Reinigungsflüssigkeit über die Flüssigkeitszuführung (29) der Peripherie eines Reinigungselementes (10, 13) zuzuführen ist.

9. Vorrichtung nach einem der vorhergehenden Ansprüche,
dadurch gekennzeichnet, daß die Trocknungsluft den Zitzen über die Trocknungsluft-Zuführung (32) sowie über mindestens eines der Reinigungselemente (13) zuzuführen ist.

10. Vorrichtung nach einem der vorhergehenden Ansprüche,
dadurch gekennzeichnet, daß die Rotationsachse eines Reinigungselementes (10, 13) durch ein mit Öffnungen versehenes Rohr (33) gebildet ist, das mit der Trocknungsluft-Zuführung (32) verbunden ist.

11. Vorrichtung nach einem der vorhergehenden Ansprüche,
dadurch gekennzeichnet, daß ein Computer mit Programmsteuerung vorgesehen ist, mittels der die Reinigungselemente (10 bis 13) an das Tiereuter anzuschließen sind, die Reinigungsflüssigkeit zugeführt und der Reinigungsvorgang durchgeführt werden, und daß ferner ein Sensor (31) vorgesehen ist, mittels dessen der Grad der Verschmutzung der Reinigungsflüssigkeit zu bestimmen ist, wobei der Reinigungsvorgang beendet und der Melkvorgang gestartet werden, wenn mittels des Sensors (31) festgestellt worden ist, daß die Verschmutzung einen vorgegebenen Wert unterschritten hat.

## Revendications

1. Appareil pour nettoyer les trayons d'animaux laitiers, tels que des vaches, avec un bras de robot (8) capable de porter un dispositif nettoyeur (6) pouvant être amené sous le pis d'un animal pour nettoyer les trayons de l'animal, des moyens (29) pour débiter un liquide de nettoyage et des moyens (32) pour débiter de l'air de séchage, un ordinateur étant muni de moyens de commande de processus, le dispositif nettoyeur (6) pouvant, par ces moyens, être amené sous le pis de l'animal, et le processus de nettoyage des trayons étant exécuté en débitant successivement le liquide de nettoyage et l'air de séchage au dispositif nettoyeur,
**caractérisé** en ce que le dispositif nettoyeur (6) est muni d'organes nettoyeurs rotatifs (10 à 13) et en ce que l'air est débité au dispositif nettoyeur à travers au moins un de ces organes nettoyeurs.

2. Appareil selon la revendication 1, caractérisé en ce que la vitesse de rotation des organes nettoyeurs (10 à 13) est telle que le liquide de nettoyage prévu ici est expulsé par l'effet centrifuge quand de l'air de séchage est débité.

3. Appareil selon la revendication 1 ou 2, caractérisé en ce que des moyens sont prévus pour déterminer les positions des trayons, à l'aide desquels moyens les organes nettoyeurs (10 à 13) peuvent être reliés automatiquement au pis de l'animal.

4. Appareil selon l'une quelconque des revendications précédentes, caractérisé en ce que les organes nettoyeurs (10 à 13) peuvent tourner d'un angle d'environ 120 degrés autour d'un axe sensiblement horizontal, de telle sorte qu'après l'opération de nettoyage, les godets de trayons (5) peuvent être branchés immédiatement.

5. Appareil selon l'une quelconque des revendications précédentes, caractérisé en ce que les organes nettoyeurs (10 à 13) sont munis de disques textiles rotatifs.

6. Appareil selon l'une quelconque des revendications précédentes, caractérisé en ce que les organes nettoyeurs (10 à 13) sont disposés dans un bol (15).

7. Appareil selon la revendication 6, caractérisé en ce que le bol (15) a des bords souples (28) à l'aide desquels le bol (15) peut être relié au pis de l'animal.

8. Appareil selon l'une quelconque des revendications précédentes, caractérisé en ce que le liquide de nettoyage peut être débité à travers les moyens d'alimentation en liquide (29) à la périphérie d'un organe nettoyeur (10 à 13).

9. Appareil selon l'une quelconque des revendications précédentes, caractérisé en ce que l'air de séchage peut être débité aux trayons a travers les moyens d'alimentation en air de séchage (32) et à travers au moins un des organes nettoyeurs (13).

10. Appareil selon l'une quelconque des revendications précédentes, caractérisé en ce que l'axe de rotation d'un organe nettoyeur (10, 13) est réalisé sous la forme d'un tube (33) muni d'ouvertures, ledit tube étant relié aux moyens d'alimentation en air de séchage (32).

11. Appareil selon l'une quelconque est revendications précédentes, caractérisé en ce qu'il est prévu un ordinateur avec des moyens de commande de processus, à l'aide duquel les organes nettoyeurs (10 à 13) peuvent être relié au pis de l'animal, le liquide de nettoyage est débité et le processus de nettoyage est exécuté, tandis qu'en outre il est prévu un capteur (31) capable d'établir le degré de contamination du liquide de nettoyage, l'opération de nettoyage étant terminée et l'opération de traite étant mise en marche quand il a été établi, à l'aide dudit capteur (31) que la contamination a diminué en dessous d'un niveau défini.
